# EUROPEAN PATENT SPECIFICATION

(11) **EP 0 310 311 B1**
(45) Date of publication and mention of the grant of the patent: **14.07.1993**
(21) Application number: 88308869.2
(22) Date of filing: 23.09.1988
(51) Int. Cl.: A01G 7/04

(54) **Method for cultivating plant**
Pflanzenzuchtverfahren
Procédé pour la culture de plantes

(30) Priority: 26.09.1987 JP 242294/87
(43) Date of publication of application: 05.04.1989
(73) Proprietor: Hayashibara, Ken, Okayama-shi Okayama (JP)
(72) Inventor: Masaki, Kazumi, Suita-shi Osaka (JP)
(74) Representative: Palmer, Roger

(56) References cited:
- GB-A- 2 160 723
- US-A- 3 309 815

## Description

The present invention relates to a method for cultivating plant, specifically, to that wherein plant is irradiated with a light obtainable by energizing an incandescent lamp with a voltage exceeding its rating.

Acceleration and control of the growth and flowering of useful plants by light irradiation have been extensively attempted in order to improve their yield and commercial value since the discovery that light is one of indispensable factors for the growth and development of plants.

Recently highlighted are plant factories wherein soft vegetables and flowering plants are manufactured with a structure house in which temperature, humidity, density of carbon dioxide gas, concentration of nutritive liquid, wind velocity, and light irradiation are severely controllable.

Modernized illumination culture, such as that employed in plant factories, usually uses high-pressure sodium vapor lamp, mercury vapor lamp, metal halide lamp, fluorescent lamp and incandescent lamp. Since the cultivation result is extremely variable with the illuminant used, it must be carefully checked prior to use.

High-pressure sodium vapor- and mercury vapor-lamps have the disadvantages that they are extremely expensive; as well as that they emit a light consisting of limited spectral components. Photosynthesis in a plant can be enhanced by increasing or decreasing the internal pressure of these lamps to control the wavelength of their light emission such that it is much more efficiently absorbed by the chlorophyl in the plant. Irradiation of such light emission, however, leads to no crop having a satisfactory quality because plants grow inherently while receiving the sunlight that consists of continuous spectrum. With this reason, combination with the sunlight is usually unavoidable.

Although fluorescent lamp is useful as a cheap illuminant, it has the same shortcoming as that of high-pressure sodium vapor- and mercury vapor-lamps with respect to spectral distribution.

Incandescent lamp has the advantage that it emits a light having a continuous spectrum similarly as the sunlight. Incandescent lamp, however, also has the shortcoming that when used in illumination culture it hardly achieves a desired cultivation result because the light has much less spectral components in the visible and ultraviolet regions than the sunlight.

In view of the foregoing, the present inventor investigated the possibility of using an incandescent lamp as the illuminant to cultivate plants, as well as investigating various means that allow incandescent lamp to emit a satisfactory sunlight-like light.

US Patent 3309815 describes the use of incandescent light to assist plant cultivation but does not address the problem of providing radiation close to that of sunlight.

The present inventor has found that a light obtained by energizing an incandescent lamp with an ac or dc voltage exceeding its rating, but preferably not exceeding 150% thereof, has a spectral distribution which is very similar to that of sunlight. Also was found that the light particularly above a certain intensity level is advantageously usable in the cultivation of plants.

More particularly, the present invention relates to a method of plant cultivation comprising: irradiating seeds, seedlings or a plant with light emitted by an incandescent lamp characterised in that an electrical supply to the incandescent lamp is controlled to provide a voltage which exceeds the voltage rating of the incandescent lamp whereby the seeds, seedlings or plant are irradiated by a light having a spectral distribution closer to that of sunlight.

An example of the present invention will hereinafter be explained with reference to the drawings in which:
FIG. 1 is the circuit of a power device for lighting incandescent lamp, which is usable in the present invention.
FIG.2 shows the spectrum distributions when an incandescent lamp is energized with a voltage exceeding its rating (solid line) or it rated voltage (broken line).
FIG.3 is the circuit of a power device for lighting incandescent lamp, which is usable in the present invention.

Throughout the drawings, reference numeral 1 is used to designate bridge diode; 2, capacitor; 3, incandescent lamp; 4, inrush current limiting circuitry; 5, arc discharge current limiting inductor; symbol T, transformer; S₁-S₂, switches; and L₁-L₅, windings.

The light usable in the invention is that which is obtainable by energizing an incandescent lamp with a dc or ac voltage exceeding its rating. To energize an incandescent lamp with such ac voltage, an ac or dc voltage from commercial ac source, generator or battery is adjusted to a prescribed level, desirably, that exceeding the rating but not exceeding 150% thereof, by using a power converting means such as transformer, converter or inverter. For example, the lamp-lighting device disclosed in Japanese Patent Laid-Open No.136,492/88 (K.Masaki) is advantageously usable in this procedure.

To energize an incandescent lamp with a dc voltage exceeding its rating, in addition to battery, for example, commercial ac source is usable by first rectifying it with a rectifier circuit bearing a smoothing means, then applying the obtained dc voltage exceeding the rating but not exceeding 150% thereof, to the incandescent lamp. The lamp-lighting device disclosed in Japanese Patent Laid-Open No.26,909/88 (K.Masaki) is advantageously usable in this procedure. In particular, it was found that the latter procedure readily attains such dc voltage when the electric capacity of the smoothing means has been preset to an appropriate level; as well as that the procedure attains high-quality crops when used in the cultivation of plants because the obtained light is much closer to the sunlight than that obtained by energizing an incandescent lamp with an ac voltage exceeding its rating.

The plants to which the present invention is applicable are those whose cultivation results can be improved by the irradiation of a light obtainable by energizing an incandescent lamp with a voltage exceeding its rating; for example, acceleration of growth and development, control of flowering and fructification, increase of fructification, acceleration of pollination or fertilization, acceleration of the growth of pollen tube and ovary; prolongation of the life of ovule, acceleration of the transport of photosynthetic products, suppression of the ethylene synthesis in fruits, shaping of plant body including fruit and petal, improvement of taste, flavor and nutritive value, and reduction or elimination of damages by noxious insects. Such plants includes those which have been subjected to conventional illumination culture, for example, vegetables such as salad, "kaiware-daikon (radish in its cotyledonal stage)", "moyashi (vegetables artificially grown in the shade)", melon, tomato, watermelon, squash, cucumber, green bell pepper, eggplant, garden pea, kidney bean, celery, turnip, chlorella, Japanese honewort, ginger, lettuce, butter-bur, perilla, garland chrysanthemum, cress, watercress, rape seedlings, "komatsu-na (Chinese cabbage, Brassica rapa var. pervidis)", spinach, soybean, taro, red pepper, cabbage, and pe-tsai; flowering plants such as rose, carnation, chrysanthemum, stock, cyclamen, freesia, gloxinia, caladium, manstera, ananas, pansy, begonia, daisy, marigold, poinsettia, cactuses including Christmas cactus, euphorbia, kalanchoe, anthurium, campanula, calceolaria and China aster; and fruit trees such as apple, almond, orange, grape, and strawberry.

The present invention is advantageously practicable in the cultivation of plants which have not been subjected to illumination culture, for example, radish, "asatsuki (a kind of edible lily, Allium ledebourianum Schult)" asparagus, azuki bean, potato, beet-root, ornamental kale, "chisha (a kind of lettuce, Lactuca sativa L.)", green soybean, lablab, edible burdock, Japanese mint, parsley, lotus, water shield, sweet-potato, yellow day lily, mustard plant, Jerusalem artichoke, arrowhead, yam bean, stevia, pot herb mustard, Oriental melon, "myoga (Japanese ginger, Zingiber mioga)", peanut, sword bean, spring onion, balsam pear, carrot, garlic, Chinese leek, potherb mustard, okra, scallion, asparagus bean, water dropwort, pickling melon, broad bean, onion, white gourd, sua-kwa, maize, Nanking shallot, wasabi, Chinese yam, wolffia, ginseng, poppy, tea plant, aloe, tobacco, rush, rice plant, barley, tangle, and wakame seaweed.

Light irradiation to such plants can be carried out by the method known per se. For example, a plant in its germination, vegetation or maturation stage is planted, for example, in or on an open field or liquid of either cultivation area such as field, paddy field, coast, pond, pool, limpid stream, vinyl house, glasshouse or laboratory; or a cultivating device, for example, in the shape of tray, pot, pack, sponge, mat, rock wool, flask or petri dish, which contains a bed soil and/or hydroponic culture medium. Thereafter, the plant is cultivated, if necessary, with water-supply system, rearing stand, cover, light-reflecting plate and/or optical fiber while controlling terrestrial environmental factors such as temperature, humidity, density of carbon dioxide gas, concentration of nutritive liquid, and air flow; and rhizospherical environmental factors such as concentration of solution, pH, electric conductivity, dissolved oxygen, and composition of nutritive liquid in accordance with the plant. In the case of certain plants including tobacco and carrot, the callus culture thereof can be irradiated according to the invention.

Since photosynthetic characteristics including light saturation and photoperiodicity and objective of irradiation are different for individual plants, the light irradiation according to the invention is continuously or continually effected with an appropriate periodicity and duration to give a prescribed irradiation dose which is consistent with the characteristics and objective. For example, in the case of strong light type plants, for example, melon, tomato, watermelon, squash, cucumber, green bell pepper, eggplant, rose and carnation, a light of 40klx or stronger is usually irradiated at an emission energy density of 0.3ly/min or higher; in the case of medium light type plants, for example, garden pea, kidney bean, celery, turnip, chrysanthemum, stock, cyclamen, freesia and Christmas cactus, a light of 10-40klx at 0.08-0.3ly/min; and in the case of weak light type plants, for example, Japanese honewrot, ginger, lettuce, butter-bur, perilla, garland chrysanthemum, gloxinia, caladium, monstera and ananas, a light of 10klx or weaker at 0.08ly/min or lower.

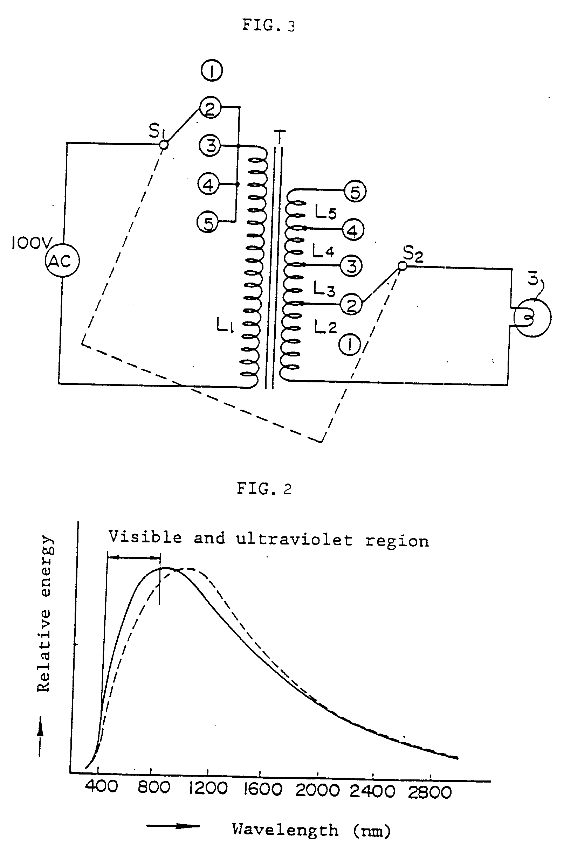

The obtainment of high-quality crops according to the invention would be explained by the facts that a light as shown in FIG.3 with the solid line, obtainable by energizing an incandescent lamp with a voltage exceeding its rating, is richer in the visible and ultraviolet components and closer in spectral distribution to the sunlight than another light as shown in FIG.2 with the broken line that is obtainable by energizing the incandescent lamp with its rated voltage; and that the visible and ultraviolet components effectively stimulate the photosynthesis by chlorophyl and the other components, in particular, that in the near infrared region, wavelength of about 800-1,000nm, synergetically act on plants in cooperation with the visible and ultraviolet components.

Although the present invention can achieve an excellent crop when solely used, it can be used in combination with one or more illuminants such as high-pressure sodium vapor lamp, mercury vapor lamp and the sunlight; agricultural chemicals such as growth controlling agent and pesticide; and irradiation of magnetic field, if necessary.

Several embodiments of the invention will hereinafter be described.

### Example 1

### "Kaiware-daikon"

Five gram seed aliquots of "Tokinashi-daikon (a type of radish, Rephanus sativus L. var. longipinnatus L.H.Bailey cv. Tokinashi)", which had been allowed to suck water at 30°C for 5 hours, were regularly arranged on germination beds, provided by filling vermiculite in polyvinyl chloride packs, 10cm×5cm×4cm in capacity each, and cultivated in a dark place at a temperature of 25°C and a relative humidity of 95%.

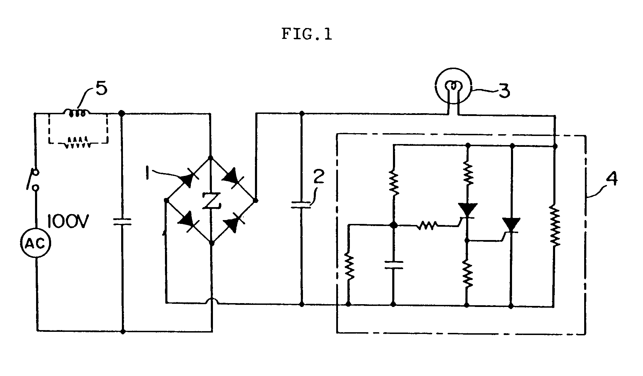

From the seventh day, one group of the packs were irradiated with 5,000lx of light over a period of 48 hours at a temperature of 25°C and a relative humidity of 90% in LH-200-PDS, NK type air conditioning device commercialized by Nippon Medical and Chemical Instruments Co., Ltd., Osaka, Japan. Five 40W incandescent lamps, rated voltage of 100V, were equipped to the air conditioning device as the illuminant, and lighted by energization of either dc 120V or ac 100V (control). In the case of applying the dc voltage, the power device shown in FIG.1 was used, while in the case of applying the ac voltage, commercial ac 100V was used intact.

During the irradiation, the distance between the illuminant and plants was occasionally changed such that the same illuminance was attained on the plants both in the system wherein the plants were cultivated while irradiating it with a light obtained by energization by the dc voltage and in the control.

Now briefly explaining the power device shown in FIG.1, since a capacitor (2) as the smoothing means is connected with the output terminal of a diode bridge (1), an incandescent lamp (3) receives a dc voltage exceeding its rating. In the circuit, reference numeral (4) is used to designate an inrush current-limiting circuitry wherein a thyristor and a time constant circuit are used in combination, while reference numeral (5) is used to designate an inductor to prevent arc discharge current which may occur on the outage of the filament of the incandescent lamp (3).

As the result, the system wherein the light obtained by energizing the incandescent lamps with the dc voltage was irradiated was superior in weight and area of leaf to the control, and marked about 2.2-fold larger crop per pack.

The crop attained in the control had an inferior shape, and its leaves colored yellowish.

While in the system wherein the light obtained by energization of the dc voltage was irradiated the crop was regularly and satisfactorily shaped, and the stems and leaves were satisfactorily thick. The part of the plant body that being desirably to be green was freshly green, while the other part that being desirably to be white was freshly white. The crop apparently had a high commercial value.

### Example 2

### Wolffia

Two hundred milliliter aliquots of a culture medium consisting of 128.8mg of urea, 26mg of KH₂PO₄, 26mg of K₂HPO₄, 28mg of CaCl₂·2H₂O, 1.5mg of EDTA, 1.2mg of ferric citrate and water were placed in medium-sized flat flasks, and one hundred individuals of Wolffia microscopia in its middle vegetation or in a stage immediately after germination were planted in each flask and cultivated for one week while aerating at a rate of 200ml/min/flask. During the cultivation, the flasks were irradiated for 12 hours at intervals of 12 hours with a light obtained by energizing an incandescent lamp with dc 130V using the device shown in FIG.1, which had been attached to the upper part of the cultivation cistern, to give an illuminance of 2,0001x on the surface of the culture medium in each flask while periodically refreshing the culture medium.

After completion of the cultivation, the number of the wolffia in the resultant culture was counted, and, on an average, 1,500 freshly green wolffia individuals were found per flask.

As control, wolffia was cultivated similarly as above, except that a light obtained by energization of intact commercial ac 100V was irradiated to give the same illuminance. After counting the number of the wollfia in the resultant culture, only 350 wollfia individuals were found, and many of them were faded or dead.

Separately, ethanol-soluble components were removed from the obtained wollfia, and the residue was treated with perchloric acid and pulverized to elute starch. After centrifugal separation, the starch in the resultant supernatant was determined by the anthrone method. The wollfia attained in the system wherein the light obtained by energizing the incandescent lamps with the dc voltage was irradiated contained about 45mg starch per gram of fresh wollfia, while that attained in the control contained only 0.8mg starch per gram of fresh wollfia.

The following examples are not methods according to the present invention and are given solely to assist in an understanding of the method employed.

### Example 3

### Muscat

In a one-are glasshouse wherein trees of Muscat of Alexandria had been planted, three 40W incandescent lamps, directed to use as head lamp for automobile, rated voltage of 12V, were provided at the upper part of the glasshouse to leave appropriate spacings. Each incandescent lamp was applied with ac 14V, which was about 120% of its rated voltage, by using the device shown in FIG.2. By this arrangement, one group of the trees were irradiated with about 601x of light downward through the grape arbors every day for 2 hours over a period from the beginning of January to the middle of March after the sunsets.

Now briefly explaining the circuit shown in FIG.2, against a primary winding L₁ of a transformer T are provided secondary windings L₂, L₃, L₄ and L₅ at a winding ratio of 100:12, 100:13, 100:14 and 100:15 respectively, while a power switch S₁ and a selection switch S₂ are arranged to be operable in association. Thus, the ac voltage across an incandescent lamp (3) is freely changeable within the range of 12-15V.

As control, another group of the trees were cultivated while irradiating them similarly as above, except that the same type of incandescent lamps were energized with ac 12V on its rating to give the same illuminance.

After harvesting, the crops were compared for their yield, quality and sugar content. As the result, the system wherein the light obtained by energizing the incandescent lamps with the ac voltage exceeding their rating was irradiated marked about 2.4-folds of the yield in the control, and the crop was larger-grained, higher in sugar content and much more sweetly tasty than that in the control.

Furthermore, some trees in the control had an infestation by noxious insects, while no infestation was noted in the system wherein the incandescent lamps were energized with the voltage exceeding their rating.

### Example 4

### "Kogiku (small chrysanthemum)"

In usual manner, cuttings of kogiku were put in a soil bed, and the rooted saplings were planted on a fresh bed soil in a glasshouse, 3 ares in area.

Thereafter, one group of the saplings were sprinkled with water and fertilized in usual manner. After the appearance of flower buds, 40W incandescent lamps directed to use as head lamp for automobile were attached to five sets of irradiating device equipped with the circuit shown in FIG.2, and a light obtained by energizing each incandescent lamp with ac 15V was continually irradiated to the saplings to give an illuminance of 20-30lx on their flower buds everyday for about 4-5 hours immediately after the sunsets in accordance with the duration of sunshine.

As control, another group of saplings were cultivated similarly as above, except that they were irradiated with the same illuminance of another light obtained by energizing incandescent lamps with ac 12V on their rating.

As the result, in the system wherein the light obtained by energizing the incandescent lamps with the ac voltage exceeding their rating was irradiated the flowering of kogiku was sufficiently suppressed, and 10-minute irradiation per night was equivalent to 150-minute irradiation in the control.

The kogiku cultivated while irradiating it with the light obtained by energizing the incandescent lamps with the ac voltage exceeding their rating had deeply green thick leaves and stem, and well-shaped sweetly smelling brilliant flowers, as well as having a high commercial value.

While the crop attained in the control had narrow leaves and thin stem, and unregularly grown non-brilliant petals, some of which infested with noxious insects.

When arranged in vases, the kogiku cultivated while irradiating it with the light obtained by energizing the incandescent lamps with the voltage exceeding their rating was irradiated was durable over a period of about 2-3 weeks which was about 2.5- to 3-fold longer than that attained in the control.

As described heretofore, since in the present invention plants are cultivated while irradiating them with a light obtained by energizing an incandescent lamp with a voltage exceeding its rating, high-quality crops can be easily harvested.

Furthermore, since the light usable in the invention has a spectrum distribution similar to that of the sunlight, the sole use of the present invention does enable the cultivation of plants which have been deemed hardly cultivable unless the sunlight is used in combination.

Having described specific embodiments of my bearing, it is believed obvious that modifications and variations of the invention is possible in light of the above teachings.

## Claims

1. A method of plant cultivation comprising: irradiating seeds, seedlings or a plant with light emitted by an incandescent lamp (3) characterised in that an electrical supply to the incandescent lamp is controlled to provide a voltage which exceeds the voltage rating of the incandescent lamp whereby the seeds, seedlings or plant are irradiated by a light having a spectral distribution closer to that of sunlight.

2. The method of claim 1, wherein said voltage is up to 150% of the rating of said incandescent lamp.

3. The method of claim 1, wherein said voltage is obtained by rectifying an alternating current with a rectifier circuit bearing smoothing means.

4. The method of claim 1, wherein said incandescent lamp is a head lamp for automobile.

5. The method of claim 1, wherein said plant is a vegetable, flowering plant, fruit tree, or algae.

## Patentansprüche

1. Verfahren zur Pflanzenzucht, bei welchem: Saaten, Sämlinge oder eine Pflanze mit Licht bestrahlt werden, das von einer Glühlampe (3) ausgesandt wird, dadurch gekennzeichnet, daß eine elektrische Stromversorgung für die Glühlampe derart gesteuert wird, daß eine Spannung angelegt wird, welche die Nennspannung der Glühlampe übersteigt, wodurch die Saaten, Sämlinge oder Pflanze durch ein Licht bestrahlt werden, dessen Spektralverteilung näher an derjenigen von Sonnenlicht liegt.

2. Verfahren nach Anspruch 1, bei welchem die Spannung bis zu 150 % der Nennspannung der Glühlampe beträgt.

3. Verfahren nach Anspruch 1, bei dem die Spannung erhalten wird, indem ein Wechselstrom mit einer Glättungseinrichtungen enthaltenden Gleichrichterschaltung gleichgerichtet wird.

4. Verfahren nach Anspruch 1, bei dem die Glühlampe eine Fernlichtlampe für Automobile ist.

5. Verfahren nach Anspruch 1, bei dem die Pflanze aus einem Gemüse, einer blühenden Pflanze, einem fruchttragenden Baum oder Algen besteht.

## Revendications

1. Procédé pour la culture de plantes, comprenant : l'éclairement de graines, de jeunes plants ou d'une plante avec une lumière émise par une lampe à incandescence (3), caractérisé en ce que l'alimentation électrique de la lampe à incandescence est réglée pour fournir une tension qui dépasse la tension nominale de la lampe à incandescence, les graines, plants ou la plante recevant ainsi une lumière ayant une répartition spectrale plus proche de celle de la lumière solaire.

2. Procédé de la revendication 1, dans lequel ladite tension représente jusqu'à 150 % de la caractéristique nominale de ladite lampe à incandescence.

3. Procédé de la revendication 1, dans lequel ladite tension est obtenue en redressant un courant alternatif par un circuit redresseur comportant des moyens de filtrage.

4. Procédé de la revendication 1, dans lequel ladite lampe à incandescence est un projecteur pour automobile.

5. Procédé de la revendication 1, dans lequel ladite plante est un légume, une plante à fleurs, un arbre fruitier ou des algues.
